# EUROPEAN PATENT SPECIFICATION

(11) **EP 0 804 286 B1**
(45) Date of publication and mention of the grant of the patent: **07.10.1998**
(21) Application number: 95926972.1
(22) Date of filing: 20.07.1995
(51) Int. Cl.: B01J 23/64, B01J 23/86

(54) **CATALYST, USE THEREOF AND PROCESS FOR PREPARATION THEREOF**
KATALYSATOR, SEINE VERWENDUNG UND VERFAHREN FÜR SEINE HERSTELLUNG
CATALYSEUR, SON UTILISATION ET SON PROCEDE DE PREPARATION

(30) Priority: 21.07.1994 EP 94401691
(43) Date of publication of application: 05.11.1997
(73) Proprietor: SHELL INTERNATIONALE RESEARCH MAATSCHAPPIJ B.V., 2596 HR Den Haag (NL)
(72) Inventor: BARRE, Guy, F-76530 Grand-Couronne (FR); BAUDOT, Alain, F-76530 Grand-Couronne (FR); BLOMME, Gérard, F-76530 Grand-Couronne (FR); LEBIGRE, Sylvie, Claude, F-76530 Grand-Couronne (FR); MOUREAUX, Patrick, F-76530 Grand-Couronne (FR)
(86) International application number: EP9502903
(87) International publication number: WO9603208

(56) References cited:
- EP-A- 0 140 608
- EP-A- 0 262 947
- EP-A- 0 324 983
- FR-A- 2 008 229
- FR-A- 2 187 887
- US-A- 4 288 347

## Description

The present invention relates to catalysts containing as the catalytically active metals one or more metals from Group VIII of the Periodic Table of Elements and chromium, to the use of these catalysts in processes involving the contacting of a hydrocarbon feedstock with hydrogen, and to a process for preparing these catalysts.

In U.S. patent specification No. 3,491,019 a catalyst has been disclosed for use in the selective hydrogenation of refractory polynuclear aromatic hydrocarbons present in a light cycle oil into monoaromatic hydrocarbons, i.e. hydrocarbons wherein the only unsaturation is in a single benzene nucleus. The catalyst comprises a metal of Group VI-B, preferably tungsten, and a metal of Group VIII, preferably nickel, deposited on a silica-alumina composite comprising 35 to 65% by weight of silica.

In U.S. patent specification No. 4,469,590 a process for hydrogenating aromatic hydrocarbons is disclosed, wherein said aromatic hydrocarbons are contacted at hydrogenation conditions with a certain catalyst in the presence of hydrogen and in the absence of an inorganic sulphur compound, particularly hydrogen sulphide. The catalyst employed comprises (i) a metal of Group VIII, preferably palladium, and (ii) a steamed support comprising a transition metal oxide selected from tungsten oxide, niobium oxide and mixtures thereof, composited with a non-zeolitic inorganic oxide, preferably alumina. The steamed support may additionally comprise a metal oxide selected from tantalum oxide, hafnium oxide, chromium oxide, titanium oxide, zirconium oxide and mixtures thereof.

The present invention aims to provide catalysts showing improved hydrogenation activity when used in a process wherein hydrocarbons comprising aromatic compounds are contacted with the catalyst at elevated temperature and pressure in the presence of hydrogen, more specifically when used in hydrotreating of hydrocarbon fractions containing aromatic compounds and compounds containing sulphur and/or nitrogen. At the moment, such hydrocarbon fractions are usually subjected to a two-stage process in order to reduce the amount of aromatic compounds. In such two-stage process the hydrocarbon fraction is subjected to a first stage in which mainly the amount of sulphur and/or nitrogen containing compounds present in the fraction is brought down, and subsequently to a second stage in which mainly the amount of aromatic compounds is reduced. Such two-stage process is necessary, as conventional catalysts for reducing the aromatics content show poor hydrogenation activity, particularly for the saturation of monoaromatics, in the presence of substantial amounts of sulphur and/or nitrogen containing compounds.

It is an object of the present invention to provide catalysts having an excellent hydrogenation activity towards aromatics, even in the presence of substantial amounts of sulphur and/or nitrogen containing compounds. The present invention also aims to provide catalysts which are particularly effective in hydrogenating monoaromatics beside di- and polyaromatics. It is a further object of the present invention that these catalysts also have a good desulphurization and/or denitrogenation activity, so that beside the amount of aromatic compounds, also the amount of sulphur and/or nitrogen containing compounds can be substantially reduced in a single stage process or in the conventionally applied two-stage process, depending on the requirements as to sulphur and nitrogen contents of the product.

Accordingly, the present invention in a first aspect relates to a catalyst comprising a refractory oxide carrier and as catalytically active metals between 2 and 15% by weight of at least one Group VIII-metal and between 5 and 40% by weight of chromium, said weight percentages indicating the amount of metal based on the total weight of carrier, whereby chromium is present as an oxide and/or as a sulphide, said catalyst being essentially free of ruthenium

Chromium may be present in the catalyst according to the present invention as chromium oxide, as chromium sulphide or as a combination of these. As will be discussed in detail hereinafter, a suitable preparation method used to prepare the present catalyst results in substantially all chromium initially being present as chromium oxide after the last drying/calcination step. If this catalyst is, however, contacted with a sulphur-containing feed than at least a part of the chromium oxide will usually be sulphided and hence converted into chromium sulphide ("in situ" sulphidation). Very good catalyst performance has been observed in this situation and therefore it is considered a preferred embodiment of the present invention to have chromium at least partly present in the catalyst as chromium sulphide. Accordingly, the catalyst may also be subjected to a separate presulphiding treatment prior to being contacted with the feed. The degree of sulphidation of chromium oxide can be controlled by relevant parameters such as temperature and partial pressures of hydrogen, hydrogen sulphide, water and/or oxygen. Suitably, there is formed an equilibrium state between chromium oxide on the one hand and chromium sulphide on the other hand, so that both are present in the catalyst.

As will be discussed in more detail below, the catalyst according to the present invention is especially advantageous for use in the hydrotreatment of gas oils and cracked cycle oils. Both these oils usually contain a relatively large amount of both aromatic compounds and sulphur and/or nitrogen containing compounds. The amounts of these compounds present in the gas oil or cracked cycle oil must usually be reduced in view of environmental regulations. Aromatic compounds reduction may also be desirable for reaching certain technical quality specifications, such as cetane number in the case of automotive gas oils, smoke point in the case of jet fuels and colour and stability in the case of lube oil fractions. When using the catalyst according to the present invention in the hydrotreatment of gas oils and cracked cycle oils, the required reduction can be attained in a single stage, so that for instance the requirements for automotive gas oils can be met. It has been found that the catalysts of the present invention are especially active in reducing the amount of mono-aromatics in the final product, even in the presence of substantial amounts of sulphur containing compounds, such as hydrogen sulphide, and nitrogen containing compounds.

The catalyst according to the present invention comprises as catalytically active metals between 2 and 15% by weight of at least one Group VIII-metal and between 5 and 40% by weight of chromium. It has been found that if lower amounts of catalytically active metals are applied, the activity of the catalyst becomes too low to be commercially attractive. If, on the other hand, the amount of catalytically active metals is higher than the upper limits indicated, the further increase in catalytic activity does not warrant the costs of the extra amount of metal. This applies in particular for the Group VIII-metal(s). Good results can be obtained with catalysts comprising between 2.5 and 12% by weight of at least one Group VIII-metal and between 8 and 35% by weight of chromium. Preferably, between 3 and 10% by weight of at least one Group VIII-metal and between 10 and 30% by weight of chromium is present in the catalyst. Of the Group VIII-metals, i.e. nickel, platinum and palladium, it is preferred to use nickel and/or palladium.

It has been found that not only the amount of each of the catalytically active metals influences the activity of the catalyst, but also the molar ratio of Group VIII-metal(s) to chromium. Molar ratios of Group VIII-metal(s) to chromium which have been found to give very good hydrogenation activity are between 0.10 and 1.20, preferably between 0.15 and 1.10. Especially good results have been obtained with a catalyst having a ratio of between 0.20 and 0.50.

The catalyst according to the present invention comprises at least one Group VIII metal, i.e. nickel, platinum and/or palladium, on the one hand and chromium on the other hand as the catalytically active metals. Of all combinations of metals possible, catalysts comprising palladium and chromium as the catalytically active metals are preferred. As already discussed above, chromium is present as an oxide and/or as a sulphide. The Group VIII metal may be present in elemental, oxidic or sulphidic form. For the purpose of the present invention, however, the Group VIII metal is, similar to chromium, suitably present as an oxide and/or as a sulphide.

In general, a carrier may influence the activity of a catalyst. For the purpose of the present invention, refractory oxide carriers, such as zeolites, alumina, amorphous silica-alumina, fluorinated alumina or mixtures of two or more of these, can suitably be used. Other suitable refractory oxide carriers include silicoaluminophosphates and clay, either alone or in combination of one or more of the before-mentioned carriers. Preferred refractory oxide carriers are zeolites with alumina and/or silica as a binder. Of these, zeolite Y with alumina as the binder is particularly preferred.

The catalysts according to the present invention will have a surface area which is such that it gives the catalyst a sufficiently high activity. Typically, the surface area of the catalyst will be at least 80 m²/g, measure according to the BET nitrogen adsorption method. Preferably, the surface area of the catalyst is at least 120 m²/g.

The catalysts according to the present invention can be applied in a large number of processes for converting hydrocarbon feedstocks comprising aromatic compounds in the presence of hydrogen. Accordingly, the present invention also relates to the use of the catalysts described above in processes wherein a hydrocarbon feedstock comprising aromatic compounds is contacted with the catalyst at elevated temperature and pressure in the presence of hydrogen. Since the present catalysts are active not only in hydrogenating aromatic compounds, but also in removing sulphur and/or nitrogen compounds, hydrocarbon feedstocks comprising sulphur and/or nitrogen containing compounds in addition to the aromatic compounds are particularly suitable. Specific examples of processes wherein the catalyst of the present invention can be suitably applied are hydrocracking, lube oil hydroisomerization, lube oil production from flashed distillates and deasphalted oils and hydrotreating.

If the catalyst is to be applied in a hydrocracking prOcess, the carrier will usually comprise a zeolite with silica and/or alumina as a binder. A carrier which is preferably used comprises zeolite Y and alumina. A hydrocracking process typically comprises contacting a hydrocarbon feedstock boiling between 100 and 500 °C, with a suitable catalyst at a temperature of between 300 and 500 °C and a pressure of between 5 and 15 MPa (50 and 150 bar) in the presence of hydrogen.

In lube oil hydroisomerization, sulphur and/or nitrogen containing contaminants are removed from a lube oil feedstock, aromatic compounds are hydrogenated and straight chain or slightly branched hydrocarbons are isomerized into further branched hydrocarbons. For application in such hydroisomerization process, the catalyst according to the present invention will preferably comprise a carrier comprising alumina, silica/alumina, silicoaluminophosphate or zeolite with silica and/or alumina as binder. A zeolite which typically can be used consists of silica and alumina and further a small amount of boron. An example of a suitable silicoaluminophosphate is SAPO-11 as described by Union Carbide or SM-3 as described by Chevron. A lube oil process typically comprises contacting a lube oil feedstock at a temperature of between 200 and 450 °C and a pressure up to 10 MPa (100 bar) with a suitable catalyst in the presence of hydrogen.

In order to convert flashed distillates and deasphalted oils into lubricating oils, their viscosity indices must be significantly improved. One way of achieving such improvement in viscosity index is hydrotreating the flashed distillates and deasphalted oils using a multifunctional hydrotreatment catalyst. Such catalyst should hydrogenate polycyclic aromatic ring systems, it should exhibit a certain ring-opening and isomerization activity and it should have a high selectivity for removing heteroatoms (N, S) present in the feed. Since the present catalyst fulfils all these requirements, it may be very well suited for producing and upgrading lubricating oils.

The catalyst according the present invention has been found to be particularly suitable for use in a hydrotreating process carried out at a temperature in the range of from 200 to 400 °C, preferably between 210 and 350 °C, and a total pressure in the range of from 2 to 20 MPa (20 to 200 bar), preferably between 2.5 and 10 MPa (25 and 100 bar). Examples of suitable hydrotreatment processes are described in European patent specifications Nos. 0,553,920 and 0,611,816. Especially good results have been found when a gas oil, a cracked cycle oil or a mixture thereof is used as the hydrocarbon feedstock for the hydrotreating process. Both gas oil and cracked cycle oil comprise at least 70% by weight of hydrocarbons boiling between 150 and 450 °C, more specifically between 200 and 450 °C. Particularly cracked cycle oils usually contain high amounts of sulphur and nitrogen containing compounds. The present catalyst is especially useful in hydrotreating straight run gas oil, light gas oil, light cycle oils and mixtures of two or more of these. With the expression "straight run gas oil" is meant a gas oil which has not yet been subjected to another conversion process. Typical light gas oils and light cycle oils comprises at least 80% by weight of hydrocarbons boiling between 150 and 450 °C. It has been found that in such process catalysts comprising a carrier containing amorphous silica-alumina, zeolite or fluorinated alumina exhibit good hydrogenation activity, whereby a carrier containing zeolite Y and alumina as the binder shows particularly good hydrogenation activity. The present catalyst is particularly effective in hydrogenating mono-aromatics, even in the presence of sulphur containing compounds, such as hydrogen sulphide, and nitrogen containing compounds.

The present catalyst has good hydrodesulphurisation (HDS) and hydrodenitrogenation (HDN) activity. However, if the products aimed at should contain only very low amounts of sulphur and/or nitrogen, it may be advantageous to use a dedicated HDS- and/or HDN-catalyst as a first stage catalyst and the present catalyst as the second stage catalyst, conveniently in a stacked bed configuration with the HDS-/HDN-catalyst on top of the present catalyst. Such dedicated HDS-/HDN-catalysts are well known in the art and usually comprise at least one Group VIII metal component and/or at least one Group VI B metal component on a refractory oxide support, such as silica, alumina, silica-alumina, zeolites or mixtures thereof. Examples are catalysts comprising nickel and/or cobalt as the Group VIII metal and molybdenum and/or tungsten as the group VI B metal, suitably on an alumina or amorphous silica-alumina support. Suitable dedicated HDS- and/or HDN-catalysts are for instance disclosed in British patent specification No. 2,073,770 and European patent specifications Nos. 0,183,283 and 0,203,228. The conditions under which the HDS and/or HDN takes place are also well known in the art and are similar to those applied when using the instant catalyst, i.e. conventional hydrotreating conditions.

The catalyst composition wherein the chromium sulphide precursor, suitably chromium oxide, has not yet been partly or totally sulphided, also forms an aspect of the present invention.

The present invention also relates to a process for preparing the catalysts described above, which process comprises incorporating the catalytically active metals into the refractory oxide carrier, suitably by means of impregnation or ion-exchange techniques, followed by drying and calcining. In order to obtain catalysts having a particularly good catalytic activity, this process can be carried out by the subsequent steps of:
(a) impregnating the refractory oxide carrier with a solution containing a chromium compound
(b) further impregnating the carrier with a solution containing at least one Group VIII-metal compound, and
(c) drying and calcining the thus impregnated carrier at a temperature in the range of from 250 to 400 °C. In a further preferred embodiment, the impregnated carrier is dried and calcined at a temperature in the range of from 300 to 650 °C, preferably 350 to 550 °C, after step (a) and prior to step (b).

A preferred method of impregnating the carrier is the so-called pore volume impregnation, which involves the treatment of a carrier with a volume of impregnating solution, whereby said volume of impregnating solution is substantially equal to the pore volume of the carrier. In this way, full use is made of the impregnating solution. For the purpose of the present invention this impregnation method has been found to be particularly suitable as the resulting catalysts show a particularly good performance.

Metal compounds which can be used for preparing the catalysts according to the present invention, are well known in the art. Typical chromium compounds include chromium(III) nitrate and chromium(III) acetate. The nickel compounds which may be used include nickel nitrate and nickel chloride. Typical palladium compounds for use in impregnating solutions are H2PdCl4, palladium nitrate, palladium(II) chloride and its amine complex. The use of H2PdCl4 is preferred. Typical platinum compounds for use in an impregnating solution are hexachloroplatinic acid, optionally in the presence of hydrochloric acid, platinum amine hydroxide and the appropriate platinum amine complexes.

If fluorinated alumina is used as the carrier, the problem of crystallisation of metal oxides during the impregnation of fluorinated alumina with the appropriate metal salts is prone to occur. A preparation process wherein this problem can be avoided comprises the subsequent steps of:
(a) impregnating a refractory oxide carrier comprising alumina with a solution containing a chromium compound,
(a') drying and calcining the impregnated carrier at a temperature in the range of from 350 to 550 °C
(a'') fluorinating the calcined carrier and drying and calcining the fluorinated carrier at a temperature of between 300 and 500 °C,
(b) further impregnating the fluorinated carrier with a solution containing at least one Group VIII metal compound, and
(c) drying and calcining the thus impregnated carrier at a temperature in the range of from 250 to 400 °C, whereby each calcination is carried out at a lower temperature than the preceding calcination.

It is common practice in catalyst preparation, to subject the catalysts in the final step to calcination in air, whereby the metals are brought in the form of their oxides. To convert the chromium oxide at least partially into its sulphide, the catalyst can be presulphided prior to contact with the feedstock. Suitable presulphiding methods are known in the art, such as for instance from European patent application No. 0,181,254. In a preferred embodiment of the present invention the processes for preparing the catalyst as described above comprises an additional presulphiding step (d) after step (c), i.e. after the last drying and calcining step.

A typical method for presulphiding the catalyst of the present invention would comprise contacting the catalyst with a sulphiding agent, such as for instance a hydrocarbon oil containing a substantial amount of sulphur-containing compounds, at a temperature which is gradually increased from ambient temperature to a temperature of between 150 and 250 °C. The catalyst is to be maintained at this temperature for between 10 and 20 hours. Subsequently, the temperature is to be raised gradually to the operating temperature.

In many cases, however, a separate presulphiding treatment could be dispensed with. In most cases, namely, the hydrocarbon feedstock contains substantial amounts of sulphur-containing compounds, so that the chromium (oxide) is at least partially converted into its sulphide during contact with the said hydrocarbon feedstock at process conditions. Typically presulphiding can be dispensed with, if the hydrocarbon feedstock comprises at least 0.5% by weight of sulphur containing compounds, said weight percentage indicating the amount of elemental sulphur relative to the total amount of feedstock. It will be understood that this may be advantageous from an economic perspective, as a separate presulphiding step would take up time during which the reactor cannot be operated.

The catalyst according to the present invention will usually slowly deactivate during use in a hydrocarbon conversion process. If the activity of the catalyst becomes too low, the catalyst can be regenerated. Suitable methods for regeneration of catalysts are known in the art. In some cases, however, the catalyst will not be regenerated. In those cases, the catalytically active metals will usually be recovered before disposal of the catalyst. Recovery of these metals can be achieved via known methods. A typical method for recovery of the catalytically active metals from spent catalyst comprises removing the deactivated catalyst from the reactor, washing the catalyst to remove the hydrocarbons, burning off the coke and subsequently recovering the platinum and/or palladium, the chromium and, if present, the nickel and/or cobalt compounds.

The invention is illustrated by the following examples.

### Example 1

As the refractory oxide carrier a binder consisting of 80% by weight dealuminated zeolite Y (faujasite) and 20% by weight of an alumina binder was used. This carrier was impregnated with an aqueous Cr(NO₃)₃.9H₂O solution to reach 20% by weight Cr₂O₃ (corresponding with 14% by weight of Cr). The partially prepared catalyst was then dried and calcined for 2 hours at 400 °C, after which impregnation with an aqueous solution of H₂PdCl₄ took place to reach a PdO content of 5% by weight (corresponding with 4.3% by weight of Pd). Finally, the completed catalyst was dried and calcined for 2 hours at 350 °C in air.

The catalyst was subsequently presulphided according to the method disclosed in European patent application No. 0,181,254. This method involved impregnation with ditertiary nonyl polysulphide diluted in n-heptane, followed by drying for 2 hours at 150 °C under nitrogen at atmospheric pressure.

Hereafter the reactor was loaded with 20 cm³ of presulphided catalyst mixed with 80 cm³ of silicon carbide particles having a diameter of 0.2 mm.

Activation of the catalyst then took place as follows. The reactor was brought on a total pressure of 10 MPa (100 bar) with the help of hydrogen at a gas rate of 1000 Nl/kg. The temperature was raised from ambient temperature to 250 °C in 2 hours, followed by the introduction of feed and increase of the temperature from 250 to 310 °C at a rate of 10 °C/hr. The temperature of 310 °C was maintained for 80 hours.

Subsequently the experiment was carried out at a total pressure of 10 MPa (100 bar), a gas rate of 1000 Nl/kg, a Weight Hourly Space Velocity (WHSV) of 1 kg/l.hr and a reactor temperature which was varied from 310 to 410 °C.

The feed used was a light cycle oil having the characteristics given in Table I.

**TABLE I**

| Composition light cycle oil | |
|---|---|
| Initial boiling point 141 °C | elemental sulphur 3.1% by weight |
| Boiling point distribution: | elemental nitrogen 0.070% by weight |
| 10% by weight 229 °C | monoaromatics 114 mmol/100 g feed |
| 50% by weight 290 °C | diaromatics 144 mmol/100 g feed |
| 90% by weight 377 °C | polyaromatics 66 mmol/100 g feed |
| Final boiling point 431 °C | |

The hydrodenitrogenation activity, hydrodesulphurization activity and the monoaromatics hydrogenation activity as a function of the temperature in the operating temperature range are given in Table II. They are expressed in N-content, S-content and monoaromatics(MA)-content in the feed, respectively.

The reason for the MA-content at some temperatures being higher than the initial MA-content of 114 mmol/100 g, is that during the hydrogenation reaction, polyaromatics are converted into monoaromatics. The hydrogenation of an aromatic ring of a polyaromatic molecule, namely, is in general kinetically more favourable than the hydrogenation of monoaromatic molecules. The hydrogenation of polyaromatics even creates monoaromatics at relatively low temperatures. Accordingly, the MA-content initially increases at hydrogenation conditions and only later on starts to decrease again. The final MA-content, therefore, can be higher as the initial MA-content. This is also illustrated by Example 2 below. From Table II it is anyway clear that the Pd-Cr catalyst has good hydrodesulphurization and hydrodenitrogenation activity (98.7% reduction in S and 99.8% reduction in N at 390 °C) and excellent monoaromatics hydrogenation activity.

**TABLE II**

| Catalyst performance | | | |
|---|---|---|---|
| Temperature | S-content (mg/kg) | N-content (mg/kg) | MA-content (mmol/100 g) |
| 310 °C | 18200 | 477 | 208 |
| 330 °C | 12900 | 296 | 193 |
| 350 °C | 6500 | 118 | 129 |
| 370 °C | 2000 | 21 | 87 |
| 390 °C | 414 | 1.7 | 85 |
| 410 °C | 310 | <1 | 171 |

### Example 2

The same catalyst as used in Example 1 was pre-sulphided and loaded in the reactor in the same way as described in Example 1. Activation was carried out under the same conditions except that the reactor was brought on a total pressure of 50 bar with the help of hydrogen at a gas rate of 500 Nl/kg.

Experiments were carried out at 5 MPa (50 bar), a gas rate of 500 Nl/kg, a WHSV of 1 kg/l.hr and a reactor temperature which was varied from 310 to 390 °C.

The feed used was a 70/30 (volume-based) blend of Arabian straight run light gas oil and light cycle oil. The feed properties are listed in Table III. Polyaromatics include aromatics having three or more aromatic rings.

**TABLE III**

| Feed properties | |
|---|---|
| elemental sulphur | 13000 mg/kg |
| elemental nitrogen | 228 mg/kg |
| monoaromatics | 77.3 mmol/100 g |
| diaromatics | 55.3 mmol/100 g |
| polyaromatics | 20.4 mmol/100g |

The hydrodenitrogenation activity, hydrodesulphurization activity and the monoaromatics hydrogenation activity were determined as a function of the temperature in the operating temperature range. The results are given in Table IV. They are expressed in N-content, S-content and aromatics-content (mono-, di- and polyaromatics), respectively.

**TABLE IV**

| Catalyst performance | | | | | |
|---|---|---|---|---|---|
| Temperature (°C) | S-content (mg/kg) | N-content (mg/kg) | monoarom. (mmol/100 g) | diarom. (mmol/100 g) | polyarom. (mmol/100 g) |
| 310 | 8200 | 96 | 124 | 14.7 | 9.1 |
| 330 | 5100 | 54 | 111 | 9.1 | 6.5 |
| 350 | 2000 | 22 | 91 | 10.4 | 4.2 |
| 360 | 957 | 10 | 81 | 10.1 | 3.7 |
| 370 | 674 | 4.9 | 84 | 11.4 | 3.8 |

Table IV again demonstrates that the catalyst according to the present invention exhibits good hydrodesulphurization and hydrodenitrogenation activity (94.8% S-reduction and 97.9% N-reduction at 370 °C) as well as a very good aromatics hydrogenation activity. Particularly the monoaromatics hydrogenation activity of the catalyst according to the present invention is excellent.

## Claims

1. Catalyst comprising a refractory oxide carrier and as catalytically active metals between 2 and 15% by weight of at least one Group VIII-metal and between 5 and 40% by weight of chromium, said weight percentages indicating the amount of metal based on the total weight of carrier, whereby chromium is present as an oxide and/or as a sulphide, said catalyst being essentially free of ruthenium.

2. Catalyst according to claim 1, wherein chromium is at least partly present as a sulphide.

3. Catalyst according to claim 1 or 2, wherein the Group VIII metal is present in an amount of 3 to 10% by weight and chromium is present in an amount of 10 to 30% by weight.

4. Catalyst according to any one of the preceding claims, wherein the molar ratio of Group VIII metal to chromium is between 0.10 and 1.20.

5. Catalyst according to any one of the preceding claims, wherein the catalyst comprises palladium as the Group VIII metal.

6. Catalyst according to any one of the preceding claims, wherein the refractory oxide carrier is selected from the group consisting of zeolites, alumina, amorphous silica-alumina, fluorinated alumina or mixtures of two or more of these.

7. Catalyst according to claim 6, wherein the refractory oxide carrier is zeolite Y with alumina as a binder.

8. Catalyst according to claim 6, wherein the refractory oxide carrier is fluorinated alumina.

9. Use of a catalyst according to any one of claims 1-8 in a process wherein a hydrocarbon feedstock comprising aromatic compounds is contacted with the catalyst at elevated temperature and pressure in the presence of hydrogen.

10. Use according to claim 9, wherein the hydrocarbon feedstock also comprises sulphur and/or nitrogen containing compounds.

11. Use according to claim 9 or 10, wherein the process is a hydrotreating process carried out at a temperature in the range of from 200 to 400 °C and a total pressure in the range of from 2 to 20 MPa (20 to 200 bar).

12. Use according to claim 11, wherein the hydrocarbon feedstock is a gas oil, a cracked cycle oil or a mixture thereof.

13. Use according to any one of claims 9 to 12, wherein the hydrocarbon feedstock is first contacted with a dedicated hydrodesulphurisation and/or hydrodenitrogenation catalyst under conventional hydrotreating conditions, suitably in a stacked bed configuration with the hydrodesulphurisation and/or hydrodenitrogenation catalyst in the upper bed.

14. Process for the preparation of a catalyst according to any one of claims 1-7, which process comprises incorporating the catalytically active metals into the refractory oxide carrier followed by drying and calcining.

15. Process according to claim 14 comprising the subsequent steps of:
(a) impregnating the refractory oxide carrier with a solution containing a chromium compound
(b) further impregnating the carrier with a solution containing at least one Group VIII-metal compound, and
(c) drying and calcining the thus impregnated carrier at a temperature in the range of from 250 to 400 °C.

16. Process according to claim 15, wherein after step (a) and prior to step (b) the impregnated carrier is dried and calcined at a temperature in the range of from 300 to 650 °C.

17. Process for the preparation of a catalyst according to claim 8 comprising the subsequent steps of:
(a) impregnating a refractory oxide carrier comprising alumina with a solution containing a chromium compound,
(a') drying and calcining the impregnated carrier at a temperature in the range of from 350 to 550 °C,
(a'') fluorinating the calcined carrier and drying and calcining the fluorinated carrier at a temperature of between 300 and 500 °C,
(b) further impregnating the fluorinated carrier with a solution containing at least one Group VIII metal compound, and
(c) drying and calcining the thus impregnated carrier at a temperature in the range of from 250 to 400 °C, whereby each calcination is carried out at a lower temperature than the preceding calcination.

18. Process according to any one of claims 15 to 17 further comprising the step of
(d) subjecting the catalyst obtained to a presulphiding treatment.

## Patentansprüche

1. Katalysator, der einen feuerfesten Oxidträger und als katalytisch aktive Metalle 2 bis 15 Gew.-% wenigstens eines Gruppe VIII-Metalls und 5 bis 40 Gew.-% Chrom umfaßt, welche Gewichtsprozentsätze die Menge Metall, bezogen auf das Gesamtgewicht des Trägers, anzeigen, wobei Chrom als Oxid und/oder als Sulfid vorliegt, welcher Katalysator im wesentlichen frei von Ruthenium ist.

2. Katalysator nach Anspruch 1, worin das Chrom wenigstens teilweise als Sulfid vorhanden ist.

3. Katalysator nach Anspruch 1 oder 2, worin das Gruppe VIII-Metall in einer Menge von 3 bis 10 Gew.-% und das Chrom in einer Menge von 10 bis 30 Gew.-% vorliegen.

4. Katalysator nach einem der vorstehenden Ansprüche, worin das Molverhältnis des Gruppe VIII-Metalls zu Chrom zwischen 0,10 und 1,20 liegt.

5. Katalysator nach einem der vorstehenden Ansprüche, worin der Katalysator Palladium als Gruppe VIII-Metall umfaßt.

6. Katalysator nach einem der vorstehenden Ansprüche, worin der feuerfeste Oxidträger aus der aus Zeolithen, Aluminiumoxid, amorphem Silciumdioxid-Aluminiumoxid, fluoriertem Aluminiumoxid oder Gemischen aus zwei oder mehreren hievon bestehenden Gruppe ausgewählt ist.

7. Katalysator nach Anspruch 6, worin der feuerfeste Oxidträger Zeolith Y mit Aluminiumoxid als Bindemittel ist.

8. Katalysator nach Anspruch 6, worin der feuerfeste Oxidträger fluoriertes Aluminiumoxid ist.

9. Verwendung eines Katalysators nach einem der Ansprüche 1-8 in einem Verfahren, worin ein aromatische Verbindungen umfassendes Kohlenwasserstoffeinsatzmaterial mit dem Katalysator bei erhöhter Temperatur und erhöhtem Druck in Gegenwart von Wasserstoff in Berührung gebracht wird.

10. Verwendung nach Anspruch 9, worin das Kohlenwasserstoffeinsatzmaterial auch schwefel- und/oder stickstoffhältige Verbindungen umfaßt.

11. Verwendung nach Anspruch 9 oder 10, worin das Verfahren ein Hydrotreatingverfahren ist, das bei einer Temperatur im Bereich von 200 bis 400°C und bei einem Gesamtdruck im Bereich von 2 bis 20 MPa (20 bis 200 bar) ausgeführt wird.

12. Verwendung nach Anspruch 11, worin das Kohlenwasserstoffeinsatzmaterial ein Gasöl, ein gecracktes Kreislauföl oder ein Gemisch hievon ist.

13. Verwendung nach einem der Ansprüche 9 bis 12, worin das Kohlenwasserstoffeinsatzmaterial zuerst mit einem speziellen Hydrodesulfurierungs- und/oder Hydrodenitrifizierungskatalysator unter herkömmlichen Hydrotreatingbedingungen, zweckmäßig in einer Stapelbettkonfiguration mit dem Hydrodesulfurierungs- und/oder Hydrodenitrifizierungskatalysator im oberen Bett, in Berührung gebracht wird.

14. Verfahren zur Herstellung eines Katalysators nach einem der Ansprüche 1-7, welches Verfahren das Einbringen der katalytisch aktiven Metalle in den feuerfesten Oxidträger, gefolgt von einem Trocknen und Kalzinieren, umfaßt.

15. Verfahren nach Anspruch 14, umfassend die aufeinanderfolgenden Stufen:
(a) Imprägnieren des feuerfesten Trägers mit einer eine Chromverbindung enthaltenden Lösung,
(b) weiteres Imprägnieren des Trägers mit einer wenigstens eine Gruppe VIII-Metallverbindung enthaltenden Lösung, und
(c) Trocknen und Kalzinieren des so imprägnierten Trägers bei einer Temperatur im Bereich von 250 bis 400°C.

16. Verfahren nach Anspruch 15, worin nach Stufe (a) und vor Stufe (b) der imprägnierte Träger bei einer Temperatur im Bereich von 300 bis 650°C getrocknet und kalziniert wird.

17. Verfahren zur Herstellung eines Katalysators nach Anspruch 8, umfassend die aufeinanderfolgenden Stufen:
(a) Imprägnieren eines feuerfesten, Aluminiumoxid enthaltenden Trägers mit einer eine Chromverbindung enthaltenden Lösung,
(a') Trocknen und Kalzinieren des imprägnierten Trägers bei einer Temperatur im Bereich von 350 bis 550°C,
(a'') Fluorieren des kalzinierten Trägers und Trocknen und Kalzinieren des fluorierten Trägers bei einer Temperatur von 300 bis 500°C,
(b) weiteres Imprägnieren des fluorierten Trägers mit einer wenigstens eine Gruppe VIII-Metallverbindung enthaltenden Lösung, und
(c) Trocknen und Kalzinieren des so imprägnierten Trägers bei einer Temperatur im Bereich von 250 bis 400°C,
wobei jede Kalzinierung bei einer niedrigeren Temperatur als die der vorhergehenden Kalzinierung durchgeführt wird.

18. Verfahren nach einem der Ansprüche 15 bis 17, welches zusätzlich die Stufe
(d) Ausführung einer Vorsulfidierungsbehandlung an dem erhaltenen Katalysator umfaßt.

## Revendications

1. Catalyseur qui comprend un support en un oxyde réfractaire et, à titre de métaux catalytiquement actifs, entre 2 et 15% en poids d'au moins un métal du groupe VIII et entre 5 et 40% en poids de chrome, lesdits pourcentages pondéraux indiquant la quantité de métal sur base du poids total du support, où le chrome est présent sous la forme d'un oxyde et/ou sous la forme d'un sulfure, ledit catalyseur étant sensiblement dépourvu de ruthénium.

2. Catalyseur suivant la revendication 1, caractérisé en ce que le chrome est au moins partiellement présent sous forme d'un sulfure.

3. Catalyseur suivant la revendication 1 ou 2, caractérisé en ce que le métal du groupe VIII est présent en une proportion de 3 à 10% en poids et le chrome est présent en une proportion de 10 à 30% en poids.

4. Catalyseur suivant l'une quelconque des revendications précédentes, caractérisé en ce que le rapport molaire du métal du groupe VIII au chrome varie de 0,10 à 1,20.

5. Catalyseur suivant l'une quelconque des revendications précédentes, caractérisé en ce que le catalyseur comprend du palladium à titre de métal du groupe VIII.

6. Catalyseur suivant l'une quelconque des revendications précédentes, caractérisé en ce que le support en un oxyde réfractaire est choisi dans le groupe formé par des zéolites, l'alumine, la silice-alumine amorphe, l'alumine fluorée ou des mélanges de deux ou de plus de deux de ces produits.

7. Catalyseur suivant la revendication 6, caractérisé en ce que le support en un oxyde réfractaire est une zéolite Y avec de l'alumine à titre de liant.

8. Catalyseur suivant la revendication 6, caractérisé en ce que le support en un oxyde réfractaire est de l'alumine fluorée.

9. Utilisation d'un catalyseur suivant l'une quelconque des revendications 1 à 8, pour la mise en oeuvre d'un procédé conformément auquel on met une charge d'hydrocarbures comprenant des composés aromatiques en contact avec le catalyseur à température et à pression élevées, en présence d'hydrogène.

10. Utilisation suivant la revendication 9, caractérisée en ce que la charge d'hydrocarbures comprend également des composés contenant du soufre et/ou de l'azote.

11. Utilisation suivant la revendication 9 ou 10, caractérisée en ce que le procédé est un procédé d'hydrotraitement que l'on entreprend à une température qui varie de 200 à 400°C et sous une pression totale qui varie de 2 à 20 MPa (20 à 200 bars).

12. Utilisation suivant la revendication 11, caractérisée en ce que la charge d'hydrocarbures est un gazole, une huile de recyclage craquée, ou un mélange de ceux-ci.

13. Utilisation suivant l'une quelconque des revendications 9 à 12, caractérisée en ce que l'on met d'abord la charge d'hydrocarbures en contact avec un catalyseur spécifié d'hydrodésulfuration et/ou d'hydrodésazotation dans des conditions d'hydrotraitement classiques, de manière appropriée selon une configuration à lit empilé où le catalyseur d'hydrodésulfuration et/ou d'hydrodésazotation forme le lit supérieur.

14. Procédé de préparation d'un catalyseur suivant l'une quelconque des revendications 1 à 7, caractérisé en ce que l'on incorpore les métaux catalytiquement actifs au support en un oxyde réfractaire, opération suivie d'un séchage et d'une calcination.

15. Procédé suivant la revendication 14, caractérisé en ce qu'il comprend les étapes subséquentes qui consistent à :
(a) imprégner le support en un oxyde réfractaire d'une solution contenant un composé du chrome,
(b) davantage imprégner le support d'une solution contenant au moins un métal du groupe VIII et
(c) sécher et calciner le support ainsi imprégné à une température qui varie de 250 à 400°C.

16. Procédé suivant la revendication 15, caractérisé en ce qu'après l'étape (a) et avant l'étape (b), on sèche et calcine le support imprégné à une température qui varie de 300 à 650°C.

17. Procédé de préparation d'un catalyseur suivant la revendication 8, caractérisé en ce qu'il comprend les étapes subséquentes qui consistent à :
(a) imprégner un support en un oxyde réfractaire comprenant de l'alumine d'une solution contenant un composé du chrome,
(a') sécher et calciner le support imprégné à une température qui varie de 350 à 550°C,
(a'') fluorer le support calciné et sécher et calciner le support fluoré à une température qui varie de 300 à 500°C,
(b) davantage imprégner le support fluoré d'une solution contenant au moins un composé d'un métal du groupe VIII et
(c) sécher et calciner le support ainsi imprégné à une température qui varie de 250 à 400°C, si bien que chague calcination est entreprise à une température inférieure à celle de la calcination précédente.

18. Procédé suivant l'une quelconque des revendications 15 a 17, caractérisé en ce qu'il comprend, en outre, l'étape consistant a
(d) soumettre le catalyseur obtenu à un traitement de presulfuration.
